## Europäisches Patentamt
## European Patent Office
## Office européen des brevets

(19)

(11) Veröffentlichungsnummer: **0 033 848**
**A2**

(12) # EUROPÄISCHE PATENTANMELDUNG

(21) Anmeldenummer: **81100239.3**

(22) Anmeldetag: **14.01.81**

(51) Int. Cl.³: **H 01 B 19/00**, H 01 B 17/32

(30) Priorität: **29.01.80 DE 3003095**

(43) Veröffentlichungstag der Anmeldung: **19.08.81**
**Patentblatt 81/33**

(84) Benannte Vertragsstaaten: **BE DE FR GB IT NL**

(71) Anmelder: **SIEMENS AKTIENGESELLSCHAFT Berlin und München, Postfach 22 02 61, D-8000 München 22 (DE)**

(72) Erfinder: **Herold, Georg, Dr., Herzogstrasse 10, D-8620 Lichtenfels (DE)**
Erfinder: **Kabs, Hermann, Dipl.-Phys., Schwandorfer Strasse 16, D-8500 Nürnberg (DE)**

(54) **Verfahren zur Herstellung von elektrischen Kunststoffverbundisolatoren.**

(57) Die Erfindung bezieht sich auf die Herstellung von elektrischen Kunststoffverbundisolatoren mit einem glasfaserverstärkten Kunststoffkern (GFK-Stab) und Schirmen aus elektrisch hochwertigen duroplastischen und thermoplastischen Formstoffen insbesondere für den Freilufteinsatz. Erfindungsgemäß werden die GFK-Stäbe (1) im Spritzgieß- oder Spritzpreßverfahren so mit Schirmen (2) ummantelt, daß jeweils die Formentrennebene (3) an oder in der Schirmspitze verläuft. Die Schirme können teilweise sich überlappend angeformt werden.

EP 0 033 848 A2

SIEMENS AKTIENGESELLSCHAFT     Unser Zeichen
Berlin und München             VPA 80 P 7509 E

Verfahren zur Herstellung von elektrischen Kunststoffverbundisolatoren

Die Erfindung betrifft ein Verfahren zur Herstellung
von elektrischen Kunststoffverbundisolatoren, insbesondere
für Freilufteinsatz mit einem glasfaserverstärkten
Kunststoffkern (GFK-Stab) und diesen umgebenden Schirmen
aus elektrisch hochwertigen und kriechstromfesten gefüllten und ungefüllten duroplastischen und thermoplastischen Formmassen.

Nach bekannten Verfahren können elektrische Kunststoffverbundisolatoren hergestellt werden, indem auf einen
Kunststoffkern (GFK-Stab) Schirme oder auch ganze
Schirmpartien im Sinter-, Schleuder- oder Gießverfahren
angeformt werden. Hierzu kann der GFK-Stab in eine Form
eingebracht werden und in dieser der gesamte äußere
Mantel des Isolators mit allen Schirmen angebracht
werden (DE-OS 1 490 529). Die Herstellungskosten sind
bedingt durch das anzuwendende Verfahren und die jeweils
erforderlichen Formen beachtlich.

Es sind ferner Verfahren zur Herstellung von elektrischen Kunststoffverbundisolatoren bekannt, wonach vorgefertigte Schirme auf einen GFK-Stab aufgezogen und mit
diesem gegebenenfalls verbunden werden z.B. durch Klebstoffe (DE-OS 1 465 922 und 2 650 363). Solche Ausführungsformen weisen vielfach undichte Stellen, Risse
und Hohlräume auf, die die elektrische Funktionstüchtigkeit des Isolators beeinträchtigen und zu frühzeitigen
Ausfällen im Leitungsbetrieb führen.

Td 2 Dm / 14.1.1980

0033848

Der Erfindung liegt die Aufgabe zugrunde, ein gegenüber
den bekannten Verfahren verbessertes Verfahren zur Herstellung von elektrischen Verbundisolatoren zu schaffen.

Das erfindungsgemäße Verfahren ist dadurch gekennzeichnet, daß die GFK-Stäbe im Spritzgieß- oder Spritzpreßverfahren so mit Schirmen ummantelt werden, daß jeweils
die Formentrennebene an oder in der Schirmspitze verläuft. Für einzelne Fälle ist es besonders günstig,
wenn der GFK-Stab mit Einzelschirmen ummantelt wird.
Die Schirme können an ihren Enden eine umlaufende Tropfkante besitzen. Sie können teilweise überlappend auf
den Strunk angeformt werden. Die angeformten Schirme besitzen keine Formtrennnähte an der Oberfläche. Sie
zeigen vor allem ein besonders günstiges Verhalten bei
späterer Bewitterung und im Freilufteinsatz. Die elektrischen Festigkeitswerte der erfindungsgemäß hergestellten
Isolatoren sind hervorragend.

Nach dem erfindungsgemäßen Verfahren können mit relativ
kleinen Schirmformen und folglich kleinen Verarbeitungsmaschinen GFK-Stäbe im Spritzgieß- bzw. Spritzpreßverfahren ummantelt werden. Es ist sowohl für die Einzelals auch für die Mehrfachanformung vorteilhaft. Es ist
in jedem Falle eine rationelle und wirtschaftliche Herstellung von Verbundisolatoren, insbesondere von Hängeisolatoren aller Spannungsreihen und beliebiger Länge
möglich. Große Stückzahlen an Isolatoren können kostengünstig nach dem Baukastenprinzip hergestellt werden.

Geeignete Formmassen sind z.B. solche auf der Basis von
aromatischen, cycloaliphatischen und heterocyclischen
Epoxidharzen, Polyurethan- und Polyesterharze, Polytetrafluoräthylen (PTFE), Polypropylen (PP), Siliconkautschuk und kautschukmodifizierte Polyolefine wie z.B.
Äthylen-Propylen-Monomerkautschuk (EPM) und Äthylen-
Propylen-Dien-Monomerkautschuk (EPDM) und deren Mischungen sowie Mischungen mit anderen Formmassen duroplastischer und thermoplastischer Art. Gute Ergebnisse, insbesondere im Hinblick auf das elektrische Verhalten unter
Freiluftbedingungen sind mit den in der DE-OS 2 742 042
angeführten Formmassen und Bedingungen erreicht worden.

Geeignete Füllstoffe sind z.B. Quarzmehl, Aluminiumoxidtrihydrat und Calcite. Kurzglasfasern haben sich als
Verstärkungsmaterial besonders bewährt.

Für manche Fälle ist es zweckmäßig, die Oberfläche der
GFK-Stäbe vorzubehandeln, beispielsweise durch fettlösende Agenzien und anschließendes Sandstrahlen und die
so vorbehandelten Stäbe sowie die Verbindungsbereiche
der Schirme mit härtbaren Schichten, Klebern oder
Haftvermittlern zu versehen. Hierfür geeignete Stoffe
sind z.B. handelsübliche Primer, Haftvermittler und
EP-Kleber, bestimmte Siliconkautschukarten.

Auch der Einsatz hochelastischer Zwischenstücke zwischen
den einzelnen Schirmen hat sich für bestimmte Ausführungsformen bewährt.

Gemäß einer besonders vorteilhaften Ausführungsform wird
der GFK-Stab senkrecht zur Formentrennebene in die Form
eingelegt und der Schirm wird so angeformt, daß die
Unterseite in der Formentrennebene liegt und die Formenfüllung über die Trennebene oder in Nähe der Trennebene
erfolgt.

Als Werkzeuge zur Herstellung der erfindungsgemäßen
Kunststoffverbundisolatoren haben sich mehrfach geteilte
Werkzeuge, die Verteilerkanäle aufweisen können, besonders bewährt. Die Formenfüllung erfolgt vorzugsweise
über die Formentrennebene oder über einen Heißkanalverteiler im Überlappungsbereich. Die Verwendung eines

0033848

Schieberwerkzeuges gestattet die Fixierung und den Durchlauf des Stabes sowie die direkte Anformung weiterer Schirme.

Die Erfindung wird anhand der Zeichnung näher erläutert.

In der Zeichnung zeigen:
Figuren 1 bis 4 im Schnitt Schemadarstellungen für verschiedene Möglichkeiten der Formenfüllung der Schirmanformung,
Fig. 5    einen Schnitt durch einen nach dem erfindungsgemäßen Verfahren hergestellten Isolator.

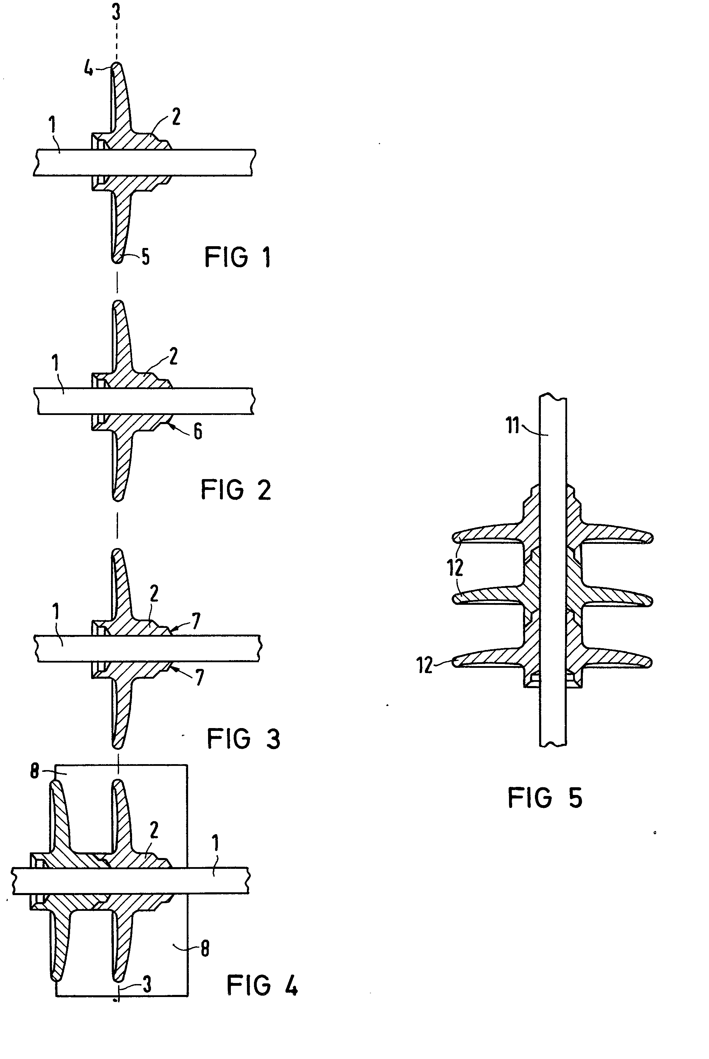

In den Figuren 1 bis 4 ist der GFK-Stab jeweils mit 1 und der Schirm jeweils mit 2 bezeichnet. 3 zeigt die Formentrennebene an. Die Schirme haben eine Tropfkante 4. Die Schirme gemäß den Figuren 1 und 2 sind durch Einzelanspritzung an Position 5 bzw. 6 hergestellt, wobei bei Position 5 die Anspritzung in der Trennebene und bei Position 6 seitlich der Trennebene erfolgt. Fig. 3 zeigt einen Schirm hergestellt durch Ringdüsenanspritzung an Position 7. Fig. 4 zeigt die Lage eines Isolatorabschnitts in einem Schieberwerkzeug. Mit 8 sind die Schieberpartien bezeichnet. Ein Schieberwerkzeug gestattet die Fixierung und den Durchlauf des Stabes wowie die direkte Anformung weiterer Schirme auf einfachste Weise.

Der in Fig. 5 dargestellte Isolator hat einen GFK-Stab 11 und Kunststoffschirme 12, die den Stab konzentrisch umgeben.

5 Figuren
7 Patentansprüche

Patentansprüche

1. Verfahren zur Herstellung von elektrischen Kunststoffverbundisolatoren insbesondere für Freilufteinsatz mit einem glasfaserverstärkten Kunststoffkern (GFK-Stab) und diesen umgebenden Schirmen aus elektrisch hochwertigen und kriechstromfesten gefüllten und ungefüllten duroplastischen und thermoplastischen Formmassen, d a - d u r c h   g e k e n n z e i c h n e t ,   daß die GFK-Stäbe im Spritzgieß- oder Spritzpreßverfahren so mit Schirmen ummantelt werden, daß jeweils die Formentrennebene an oder in der Schirmspitze verläuft.

2. Verfahren nach Anspruch 1, d a d u r c h   g e - k e n n z e i c h n e t ,   daß der GFK-Stab mit Einzelschirmen ummantelt wird.

3. Verfahren nach Anspruch 2, d a d u r c h   g e - k e n n z e i c h n e t ,   daß Schirme sich teilweise überlappend angeformt werden.

4. Verfahren nach Anspruch 1 bis 3, d a d u r c h   g e k e n n z e i c h n e t ,   daß der GFK-Stab senkrecht zur Formentrennebene in die Form eingelegt wird und ein Schirm so angeformt wird, daß die Unterseite in der Formentrennebene liegt und die Formenfüllung über die Trennebene oder seitlich der Trennebene erfolgt.

5. Verfahren nach Anspruch 1 bis 4, d a d u r c h   g e k e n n z e i c h n e t ,   daß die Oberfläche der GFK-Stäbe vorbehandelt und diese sowie die Schirmverbindungsbereiche mit härtbaren Schichten, Klebern oder Haftvermittlern versehen werden.

6. Vorrichtung zur Durchführung des Verfahrens nach den vorangegangenen Ansprüchen, d a d u r c h   g e -

k e n n z e i c h n e t ,   daß das Werkzeug mehrfach
unterteilt ist.

7. Vorrichtung nach Anspruch 6,   d a d u r c h   g e -
k e n n z e i c h n e t ,   daß das Werkzeug Verteilerkanäle aufweist.

0033848

1/1    80 P 7509

FIG 1

FIG 2

FIG 3

FIG 4

FIG 5